(19) **Europäisches Patentamt European Patent Office Office européen des brevets**

(11) **EP 2 441 513 B1**

(12) **EUROPEAN PATENT SPECIFICATION**

(45) Date of publication and mention
of the grant of the patent:
**07.08.2013 Bulletin 2013/32**

(51) Int Cl.:
*B01J 21/08* (2006.01)          *B01J 27/224* (2006.01)
*B01J 35/00* (2006.01)          *B01J 35/02* (2006.01)
*B01J 35/04* (2006.01)          *B01J 37/02* (2006.01)
*B01J 37/08* (2006.01)          *B01J 37/14* (2006.01)
*B01J 35/10* (2006.01)          *B01D 53/94* (2006.01)
*B01J 29/072* (2006.01)

(21) Application number: **11182147.6**

(22) Date of filing: **21.09.2011**

(54) **Honeycomb catalyst body and method for manufacturing honeycomb catalyst body**

Wabenkatalysatorkörper und Herstellungsverfahren für einen Wabenkatalysatorkörper

Corps de catalyseur en nid d'abeille et son procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2010 JP 2010230194**

(43) Date of publication of application:
**18.04.2012 Bulletin 2012/16**

(73) Proprietor: **Ibiden Co., Ltd.**
**Ogaki-shi**
**Gifu 503-8604 (JP)**

(72) Inventors:
 • **Iwakura, Misako**
  **Ibi-gun**
  **Gifu 501-0695 (JP)**

 • **Ota, Kohei**
  **Ibi-gun**
  **Gifu 501-0695 (JP)**

(74) Representative: **HOFFMANN EITLE**
**Patent- und Rechtsanwälte**
**Arabellastrasse 4**
**81925 München (DE)**

(56) References cited:
 **EP-A1- 1 666 146     EP-A1- 1 707 546**
 **EP-A1- 2 123 354     WO-A2-2009/023202**
 **JP-B2- 2 731 562     US-A1- 2003 021 949**

**Description**

TECHNICAL FIELD

The present invention relates to a honeycomb catalyst body and a method for manufacturing a honeycomb catalyst body.

BACKGROUND ART

Recently, particulates (hereinafter, also referred to as PM) such as soot in exhaust gases discharged from internal combustion engines such as diesel engines have raised problems as contaminants harmful to the environment and the human body. Further, there have been concerned about an influence on the environment and the human body by toxic gas components, such as CO, HC, and NOx, also contained in the exhaust gases.

To capture PM and convert toxic gas components in exhaust gases, various honeycomb catalyst bodies have been proposed, which are manufactured by supporting catalysts such as platinum on honeycomb structured bodies made of porous ceramics.
The porous ceramics forming the honeycomb structured body may be, for example, a silicon carbide from the standpoint of thermal resistance and chemical resistance.

For examples, Patent Document 1 discloses such a honeycomb catalyst body in which a honeycomb structured body carries a supporting material such as aluminum so that a catalyst is dispersively supported thereon.

Patent Document 1 discloses formation of a silica layer on the surface of each of the silicon carbide particles forming the honeycomb structured body with an aim of accelerating a chemical bond between silicon carbide and aluminum or the like.
Patent Document 1 also discloses that a silica layer is formed by oxidation treatment of a honeycomb structured body through heating at 800°C to 1600°C for 5 to 100 hours.

Patent Document 2 discloses formation of a silica layer having an oxygen concentration of 1% to 10% by weight by heating a silicon carbide sintered body under an air atmosphere at 800 °C to 1600°C for 5 to 100 hours.

Moreover, a urea-SCR (Selective Catalytic Reduction) device for converting NOx in exhaust gases has been proposed in recent years.
In the urea-SCR device, aqueous urea solution, for example, is sprayed into an exhaust gas purifying device equipped with a honeycomb catalyst body that is a honeycomb structured body supporting a catalyst such as zeolite thereon. Then, zeolite adsorbs ammonia generated by pyrolysis of urea to reduce NOx.

    Patent Document 1: JP-A 2003-154223
    Patent Document 2: JP-A 2000-218165

JP 2731562 discloses a honeycomb catalyst body comprising a honeycomb fired body and a catalyst supported on a silica layer formed on the honeycomb fired body, the catalyst is oxide ceramics which is represented by platinum.

EP 1707 546 A1 discloses a honeycomb structure used in a purification apparatus for an exhaust gas discharged from an internal engine for an automobile, comprising a honeycomb structured body wherein a silica layer is formed on a surface of each of the silicon carbide particles.

EP 1666 146 A1 discloses a honeycomb catalyst body comprising a honeycomb fired body and a catalyst loaded on the surface of the fired body via a film comprising a silicon-containing oxide, wherein said catalyst contains alumina and ceria as main component.

WO 2009/023202 A2 discloses a honeycomb catalyst body and zeolite as the catalyst supported on the cell walls.

DISCLOSURE OF THE INVENTION

PROBLEMS TO BE SOLVED BY THE INVENTION

The present invention is aimed to provide a honeycomb catalyst body in which a catalyst is supported on the surface of silicon carbide particles that form the honeycomb structured body and each have a silica layer formed on the surface.
The present invention is also aimed to provide a method for manufacturing the honeycomb catalyst body.

MEANS FOR SOLVING THE PROBLEMS

A honeycomb catalyst body according to claim 1 includes: a honeycomb structured body including a porous honeycomb fired body having a large number of cells longitudinally placed in parallel with one another with a cell wall interposed therebetween, the honeycomb fired body containing 60% by weight or more of silicon carbide; and a catalyst containing zeolite, the catalyst being supported on the honeycomb structured body, wherein a silica layer is formed on a surface of each of the silicon carbide particles, the catalyst is supported on the surface of each of the silicon carbide particles via the silica layer therebetween, the silica layer has a thickness measured by X-ray photoelectron spectroscopy (XPS) of 5 to 100 nm, and an amount of the zeolite supported is 50 g/L or more.

In the honeycomb catalyst body according to claim 1, a silica layer is formed on the surface of each of silicon carbide particles constituting the honeycomb structured body. A catalyst containing zeolite is supported on the surface of each of the silicon carbide particles via the silica layer therebetween.

An oxide layer formed on the surface of each of the silicon carbide particles allows the catalyst to be uniformly supported.

In the honeycomb catalyst body according to claim 1, the thickness of the silica layer measured by X-ray photoelectron spectroscopy (XPS) is 5 to 100 nm.

When the thickness of the silica layer measured by X-ray photoelectron spectroscopy (XPS) (hereinafter, simply referred to as "the thickness of the silica layer") is 5 to 100 nm, it is presumable that the catalyst containing oxide ceramics or zeolite is more likely to be uniformly supported for the following reasons. There is a neck portion between the silicon carbide particles (a narrow part formed between two particles bound to each other). In the case that a silica layer having a thickness of 5 to 100 nm is formed in such a neck portion, the neck portion is allowed to have no deep depression. In such a state, a catalyst is more easily supported on the surface of each of the silicon carbide particles. Accordingly, it is possible to avoid a case where more catalyst is supported on the depression of the neck portion. As a result, the catalyst is presumably supported on the surface of each of the silicon carbide particles in a uniform thickness.

In the case that the silica layer has a thickness of less than 5 nm, NOx conversion efficiency is not sufficient when such a honeycomb catalyst body is used in a urea-SCR device. The reason for this is presumably that the catalyst is not uniformly supported on the surface of each of the silicon carbide particles because the catalyst piles up in the neck portion between the silicon carbide particles when the silica layer has a thickness of less than 5 nm.

On the other hand, also in the case where the silica layer has a thickness of more than 100 nm, NOx conversion efficiency is not sufficient when such a honeycomb catalyst body is used in a urea-SCR device. The reason for this is presumably that pores in the cell wall are buried when the silica layer has a thickness of more than 100 nm. This causes nonuniform flow of gases through the cell wall of the honeycomb fired body to lower NOx conversion efficiency.

In the honeycomb catalyst body according to claim 1, the amount of the zeolite supported is 50 g/L or more.

As above mentioned, in the honeycomb catalyst body according to claim 1, zeolite is supported uniformly on the surface of each of the silicon carbide particles. However, in the case the amount of the zeolite supported is less than 50 g/L, NOx conversion efficiency is not sufficient when such a honeycomb catalyst body is used in a urea-SCR device. Or it may be needed to increase the size of the honeycomb catalyst body.

As the honeycomb catalyst body according to claim 2, the zeolite is preferably supported on an inside of the cell wall of the honeycomb fired body.

The zeolite supported on the inside of the cell wall of the honeycomb fired body prevents a case where a large amount of the catalyst is supported on the cell wall. This prevents increase in the pressure loss of the honeycomb catalyst body. In addition, since an enough contact distance can be kept between exhaust gases and the catalyst such as zeolite relative to the flow rate of the exhaust gases passing through the cell walls, the catalyst such as zeolite can exert its catalytic function.

As the honeycomb catalyst body according to claim 3, the honeycomb structured body may have a single honeycomb fired body. Further, as the honeycomb catalyst body according to claim 4, the honeycomb structured body may have a plurality of honeycomb fired bodies bound to one another with an adhesive layer interposed therebetween.

A method for manufacturing a honeycomb catalyst body according to claim 8 is a method for manufacturing a honeycomb catalyst body including: a honeycomb structured body including a porous honeycomb fired body having a large number of cells longitudinally placed in parallel with one another with a cell wall interposed therebetween, the honeycomb fired body containing 60% by weight or more of silicon carbide; and a catalyst containing zeolite, the catalyst being supported on the honeycomb structured body, the method including: oxidizing the honeycomb structured body including a porous honeycomb fired body by heating under an oxidative atmosphere at 700°C to 1100°C for 1 to 10 hours; and supporting a catalyst containing zeolite on the honeycomb structured body after the oxidation process, wherein the oxidation process includes formation of a silica layer having a thickness measured by X-ray photoelectron spectroscopy (XPS) of 5 to 100 nm on a surface of each of the silicon carbide particles in the honeycomb fired body, and the supporting process includes supporting of 50 g/L or more of the zeolite.

In the method for manufacturing a honeycomb catalyst body according to claim 8, the honeycomb catalyst body of the present invention is favorably manufactured.

As the method for manufacturing a honeycomb catalyst body according to claim 9, the oxidative atmosphere in the oxidation process preferably has an oxygen concentration of 5% to 21% by volume.

In the case where the oxygen concentration of the oxidative atmosphere is less than 5% by volume, oxidation of the surface of each of the silicon carbide particles is unstable and formation of a silica layer having a desired thickness is difficult. Further, in the case where the oxygen concentration of the oxidative atmosphere is less than 5% by volume, a heat treatment is required to be performed for a long period of time and the manufacturing efficiency tends to be lowered. On the other hand, in the case where the oxygen concentration of the oxidative atmosphere is more than 21% by volume, an additional process is needed for generating the oxidative atmosphere, such as preparation of gaseous oxygen, and the manufacturing efficiency tends to be lowered.

As the method for manufacturing a honeycomb catalyst body according to claim 10, the method preferably further includes bonding a plurality of honeycomb fired bodies via an adhesive layer therebetween.

BRIEF DESCRIPTION OF THE DRAWINGS

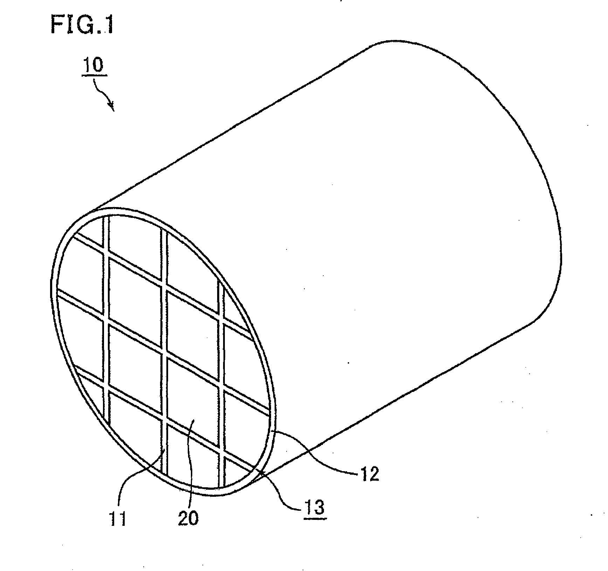

Fig. 1 is a schematic perspective view illustrating one example of a honeycomb structured body configuring a honeycomb catalyst body of a first embodiment of the present invention.

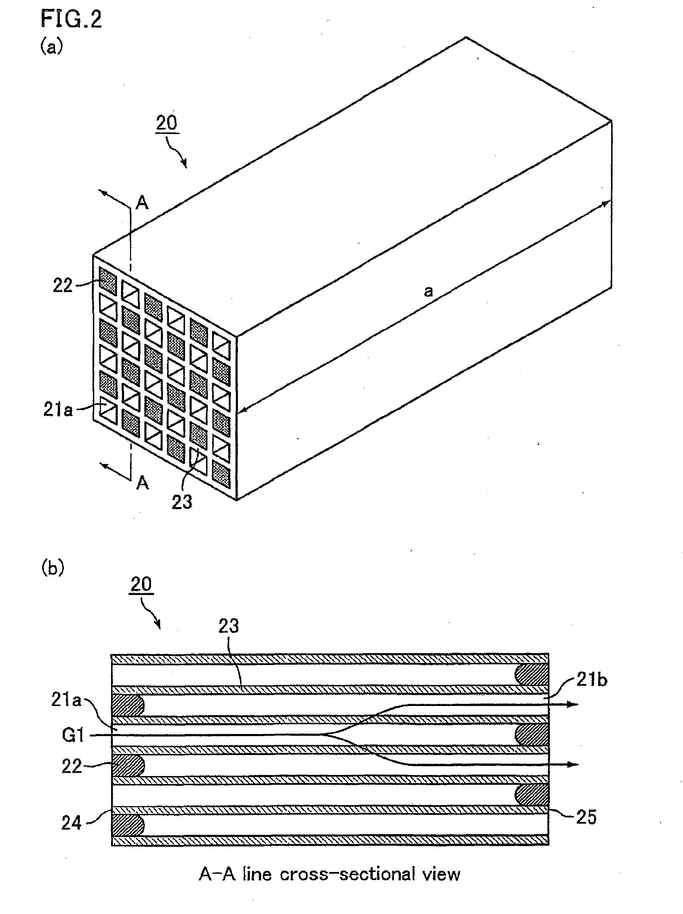

Fig, 2(a) is a schematic perspective view illustrating one example of a honeycomb fired body configuring the honeycomb structured body illustrated in Fig. 1. Fig. 2 (b) is an A-A line cross-sectional view illustrating the honeycomb fired body in Fig. 2(a).

Fig. 3 is a partially enlarged view schematically illustrating one example of the honeycomb catalyst body of the first embodiment of the present invention.

Fig. 4 is a graph showing a relation between the thickness of a silica layer and NOx conversion efficiency in Examples and Comparative Examples.

Fig. 5(a) is a schematic perspective view illustrating one example of a honeycomb structured body configuring a honeycomb catalyst body of a second embodiment of the present invention. Fig. 5(b) is a B-B line cross-sectional view of the honeycomb structured body in Fig. 5(a).

MODES FOE CARRYING OUT THE INVENTION

For converting NOx at a high efficiency in a urea-SCR device, it is presumably required to support a large amount of zeolite on cell walls of a honeycomb structured body. This is for adsorption of a large amount of ammonia and gases are preferably diffused in the cell walls.

Assuming use of a honeycomb catalyst body in a urea-SCR device, present inventors have tried to develop a honeycomb catalyst body in which a catalyst is supported on a honeycomb structured body (cell wall) when a large amount of catalyst is supported on the honeycomb structured body.

The present inventors have first manufactured a conventional honeycomb catalyst body based on Patent Documents 1 and 2.

However, the honeycomb catalyst body manufactured in the above method did not show sufficient NOx conversion efficiency when used in a urea-SCR device. Such a result is presumably caused by zeolite nonuniformly supported in the honeycomb catalyst body.

Namely, as above described, a too-thin silica layer causes piling up of zeolite (catalyst) in an interglanular neck portion of the silicon carbide particles, resulting in nonuniform support of zeolite (catalyst).

As disclosed in Patent Document 2, even in the case that a silica layer having an oxygen concentration (content as oxygen) of 1% to 10% by weight is formed on the surface of each of the silicon carbide particles, a too-thick silica layer causes nonuniform support of zeolite (catalyst).

From these studies, the present inventors have found out that control of the thickness of the silica layer to be formed on the surface of the silicon carbide particles within a predetermined range allows a catalyst to be more uniformly supported on the surface of each of the silicon carbide particles, even in the case that a large amount of catalyst is supported on the honeycomb structured body. Accordingly, the present invention has been completed.

Hereinafter, specific description is given on embodiments of the present invention. However, the present invention is not limited to these embodiments and these embodiments may be changed without departing from the present invention.

(First Embodiment)

Now, a description is given with reference to drawings on a first embodiment that is one embodiment of a honeycomb catalyst body and a method for manufacturing a honeycomb catalyst body of the present invention.

First, a description is given on a honeycomb catalyst body according to the first embodiment of the present invention.

Fig. 1 is a schematic perspective view illustrating one example of a honeycomb structured body configuring a honeycomb catalyst body of the first embodiment of the present invention.

Fig, 2(a) is a schematic perspective view illustrating one example of a honeycomb fired body configuring the honeycomb structured body illustrated in Fig. 1. Fig. 2 (b) is an A-A line cross-sectional view illustrating the honeycomb fired body in Fig. 2 (a) .

In a honeycomb structured body 10 illustrated in Fig. 1, a plurality of porous honeycomb fired bodies 20 mainly made of silicon carbide particles are bound to one another via an adhesive layer 11 therebetween to form a ceramic block 13. On the periphery of the ceramic block 13, a coat layer 12 is formed to prevent exhaust gas leakage. Here, the coat layer may be formed according to need.

Such a honeycomb structured body including a plurality of honeycomb fired bodies bound to one another is referred to as an aggregated honeycomb structured body.

The honeycomb fired bodies 20 each have a shape illustrated in Figs. 2(a) and 2(b).

In each of the honeycomb fired bodies 20 illustrated in Figs. 2(a) and 2(b), a large number of cells 21a and 21b are longitudinally (direction of arrow "a" in Fig. 2(a)) placed in parallel with one another with a cell wall 23 interposed therebetween. Either one end portion of each of the cells 21a and 21b is plugged with a plug material 22. Therefore, exhaust gases G1 (in Fig. 2(b), exhaust gases are represented by "G1" and a flow thereof is indicated by arrows) which have flowed into one of the cells 21a with an opening on one end face 24 surely pass through the cell wall 23 that partitions the cells 21a and the cells 21b with an opening on the other end face 25, and flow out from one of the cells 21b. Thus, the cell wall 23 functions as a filter for capturing PM and the like.

Here, among the surfaces of the honeycomb fired body and honeycomb structured body, the surfaces to which the cells are open are termed "end faces" and the surfaces other than the ends faces are termed "side faces".

The honeycomb fired body is mainly made of silicon carbide particles and may be referred to as a silicon carbide honeycomb fired body. Specifically, the honeycomb fired body contains 60% by weight or more of silicon carbide. In the honeycomb fired body, a large number of silicon carbide particles serving as aggregates are bound to one another with a large number of fine pores kept therebetween.

The honeycomb fired body may contain other components, provided that 60% by weight or more of silicon carbide is contained. For example, the honeycomb fired body may contain 40% by weight or less of silicon. The main component of the materials for forming the honeycomb fired body may be silicon-containing silicon carbide that is silicon carbide blended with metal silicon or may be silicon carbide bound with silicon or a silicate compound. In the case that the honeycomb fired body contains silicon such as metal silicon, a silica layer is also formed on the surface of the silicon.

In particular, the honeycomb fired body preferably contains 98% by weight or more of silicon carbide or 98% by weight or more of a combination of silicon carbide and metal silicon.

In the honeycomb catalyst body of the present embodiment, a catalyst containing zeolite is supported on the surface of the silicon carbide honeycomb fired body configuring the honeycomb structured body. The catalyst is preferably supported on cell walls in the honeycomb fired body configuring the honeycomb structured body.

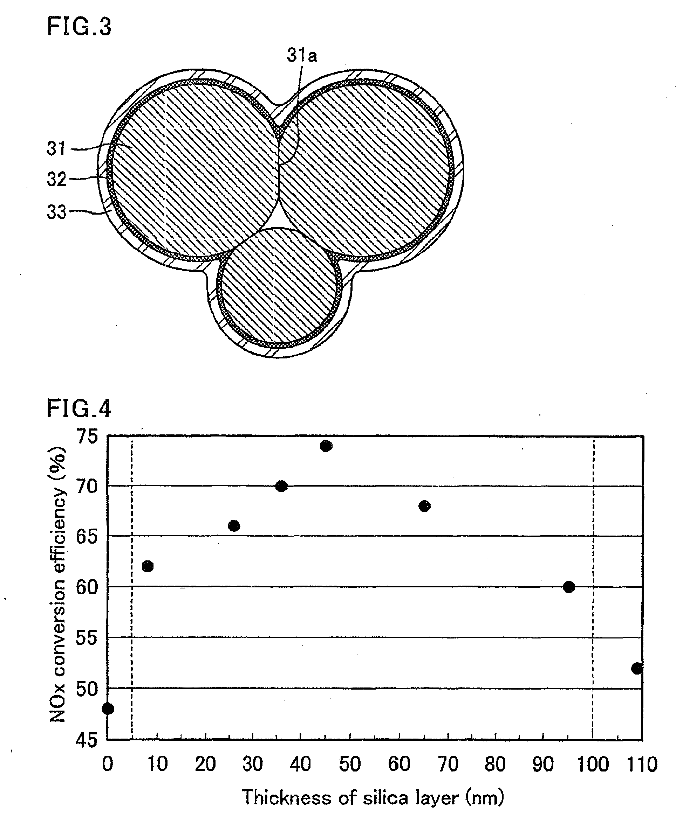

Fig. 3 is a partially enlarged view schematically illustrating one example of the honeycomb catalyst body of the first embodiment of the present invention.

As illustrated in Fig. 3, silicon carbide particles 31 forming the honeycomb fired body are bound to one another via a neck 31a therebetween. On each of the surfaces of the silicon carbide particles 31, a silica ($SiO_2$) layer 32 is formed. A catalyst 33 is supported on the surfaces of the silicon carbide particles 31 via the silica layers 32 therebetween.

The thickness of the silica layer measured by X-ray photoelectron spectroscopy (XPS) is 5 to 100 nm. In the honeycomb catalyst body according to embodiments of the present invention, the thickness of the silica layer may be measured by X-ray photoelectron spectroscopy (XPS). The X-ray photoelectron spectroscopy (XPS) is an analysis method in which photoelectron energy generated by irradiation of a sample surface with X rays is measured by using a device named energy analyzer. The X-ray photoelectron spectroscopy (XPS) enables analysis of the constituent elements of the sample and its electronic state. In addition, alternate performance of the X-ray photoelectron spectroscopy (XPS) and ion sputtering clarifies change in composition in the depth direction (thickness direction) of the sample.

In the honeycomb catalyst body according to embodiments of the present invention, the depth (thickness) of the silica layer can be determined by filing the sample surface at a constant rate by the ion sputtering and analyzing the composition thereof by the X-ray photoelectron spectroscopy (XPS). Based on the measurement results using these measuring methods, it is determined that the silica layer having a thickness of 5 to 100 nm is formed on each of the surfaces of the silicon carbide particles.

The lower limit of the thickness of the silica layer is more preferably 20 nm, and still more preferably 30 mn. The upper limit of the thickness of the silica layer is more preferably 70 nm, and still more preferably 60 nm.

With regard to the silica layer formed on each of the surfaces of the silicon carbide particles, the thickness is more preferably 8 to 95 nm.

In the present description, the thickness of the silica layer refers to the thickness of the silica layer prior to the use of the honeycomb catalyst body mounted on an automobile and the like.

In the honeycomb catalyst body according to embodiments of the present invention, the weight ratio of the silica layer corresponds to the weight increase obtainable by measuring the weight of the honeycomb fired body or the honeycomb structured body before and after formation of the silica layer.
The weight increase is preferably 0.06% to 0.49% by weight. In such a case, the silica layer is allowed to have a uniform thickness.

Next, a description is given on the catalyst.
The main component of the catalyst is zeolite. The catalyst may further contain other components such as noble metal components or alkaline earth metals, in addition to the zeolite.
Commonly, it is possible to categorize zeolite as one kind of oxide ceramics. However, in the present description, zeolite is not considered as oxide ceramics. In addition, zeolite includes not only zeolite as aluminosilicates but also zeolite analogs such as aluminophosphate and aluminogermanate.

Examples of oxide ceramics include ceramics such as $Al_2O_3$, $ZrO_2$, $TiO_2$, $CeO_2$, and $ZrO_2$.

Examples of zeolite include $\beta$-type zeolite, Y-type zeolite, ferrierite, ZSM-5 type zeolite, mordenite, faujasite, A-type zeolite, L-type zeolite, SAPO (Silicoaluminophosphate), MeAPO (Metalaluminophosphate), and the like. Each of these may be used alone, or two or more of these may be used in combination.
Among the above zeolites, $\beta$-type zeolite, ZSM-5 type zeolite, or SAPO is preferable. Moreover, Among the SAPOs, SAPO-5, SAPO-11, or SAPO-34 is preferable, and SAPO-34 is more preferable. Among the MeAPOs, MeAPO-34 is preferable.

The zeolite is preferably ion exchanged with metal ions.
Examples of the metal ions include copper ion, iron ion, nickel ion, zinc ion, manganese ion, cobalt ion, silver ion, vanadium ion, and the like. Each of these may be used alone, or two or more of these may be used in combination.
Among the above metal ions, copper ion or iron ion is preferable from the standpoint of NOx conversion efficiency.

The amount of zeolite supported on the honeycomb structured body is 50 g/L or more, and is preferably 50 to 150 g/L. More preferably, the amount of zeolite supported on the honeycomb structured body is 80 g/L or more, and is still more preferably 80 to 150 g/L.
When the amount of zeolite is less than 50 g/L, the amount of the catalyst is small and NOx conversion efficiency is not sufficient when such a honeycomb catalyst body is used in a urea-SCR device. Or it may be needed to increase the size of the honeycomb catalyst body. When the amount of zeolite is more than 150 g/L, the amount of the catalyst is too large and the pore size (pore diameter) in the honeycomb fired body is reduced to increase the pressure loss of the honeycomb structured body.
In the present description, the amount of the zeolite supported on the honeycomb structured body refers to the weight of the zeolite per litter of apparent volume of the honeycomb structured body.
Here, the apparent volume of the honeycomb structured body includes the volume of the adhesive layer and/or the coat layer.

The zeolite is preferably supported on the inside of the cell walls in the honeycomb fired body.
The zeolite supported on the inside of the cell walls prevents a case that a large amount of catalyst is supported on the cell walls to avoid increase in the pressure loss of the honeycomb catalyst body. Additionally, since the contact distance between the catalyst such as zeolite and exhaust gases is kept enough relative to the flow rate of the exhaust gases passing through the cell walls, the catalyst such as zeolite can exert its catalytic function.

In the honeycomb catalyst body of the present embodiment, the average particle size of the catalyst (zeolite) is not particularly limited, and is preferably 0.5 to 5 $\mu$m.
In the case that the average particle size of the catalyst is less than 0.5 $\mu$m, the catalyst tends to pile up in the interglanular neck of the silicon carbide particles to deteriorate the conversion performance. On the other hand, when the average particle size of the catalyst is more than 5 $\mu$m, a contact between exhaust gases and the catalyst or dispersion of the catalyst may be poor.

Next, a description is given on a method for manufacturing the honeycomb catalyst body according to the first embodiment of the present invention.
A method for manufacturing a honeycomb catalyst body according to the present embodiment is a method for manufacturing a honeycomb catalyst body including: a honeycomb structured body including a porous honeycomb fired body having a large number of cells longitudinally placed in parallel with one another with a cell wall interposed therebetween, the honeycomb fired body being mainly made of silicon carbide particles; and a catalyst containing zeolite, the catalyst being supported on the honeycomb structured body, the method including: oxidizing the honeycomb structured body including a porous Honeycomb fired body by heating under an oxidative atmosphere at 700°C to 1100°C for 1 to 10 hours; and supporting a catalyst containing zeolite on the honeycomb structured body after the oxidation process, wherein the oxidation process includes formation of a silica layer having a thickness measured by X-ray photoelectron spectroscopy (XPS) of 5 to 100 nm on a surface of each of the silicon carbide particles in the honeycomb fired body, and the supporting process includes supporting of 50 g/L or more of the zeolite.

The honeycomb structured body used in the method for manufacturing the honeycomb catalyst body of the present embodiment may be manufactured through the following procedures: molding a ceramic raw material to form a honeycomb molded body having a large number of cells longitudinally placed in parallel with one another with a cell wall interposed therebetween; firing the honeycomb molded body to manufacture a honeycomb fired body; and bonding a plurality of the honeycomb fired bodies with an adhesive layer interposed therebetween to manufacture a ceramic block.

Hereinafter, a description is given on the method for manufacturing the honeycomb catalyst body in which a catalyst is supported on a honeycomb structured body having a honeycomb fired body as illustrated in Figs. 2 (a) and 2(b) in the order of procedures.

First, a molding process is carried out in which a ceramic raw material is molded to give a honeycomb molded body having a large number of cells longitudinally placed in parallel with one another with a cell wall interposed therebetween. More specifically, silicon carbide powders having different average particle sizes as ceramic powder, an organic binder, a fluid plasticizer, a lubricant, and water are first mixed to give a ceramic raw material (wet mixture) for manufacturing a honeycomb molded body.

Next, the wet mixture is charged into an extrusion molding machine. By extrusion-molding the wet mixture, a honeycomb fired body in a desired shape is manufactured.

Subsequently, the honeycomb molded body is cut at a desired length and dried using a microwave drying apparatus, a hot-air drying apparatus, a dielectric drying apparatus, a reduced-pressure drying apparatus, a vacuum drying apparatus, a freeze drying apparatus, and the like. Then, a plugging process is carried out in which predetermined end portions of the cells are filled with a plug material paste serving as plugs to plug the cells.

The ceramic raw material (wet mixture) can be used as a plug material paste.

Then, a degreasing process is carried out in which an organic matter in the honeycomb molded body is heated in a degreasing furnace, Then, the degreased honeycomb molded body is transferred to a firing furnace and a firing process is carried out. In this manner, a honeycomb fired body as illustrated in Figs. 2(a) and 2(b) is manufactured.

Here, the plug material paste filled in the predetermined end portions of the cells is fired by heating to be plugs.

Conditions conventionally used in manufacturing honeycomb fired bodies can be applied to conditions for the above cutting, drying, plugging, degreasing, and firing processes.

Next, a bonding process is carried out in which a plurality of the honeycomb fired bodies are bonded to each other with an adhesive layer interposed therebetween to provide a ceramic block. Hereinafter, an exemplary bonding process is described.

First, an adhesive paste is applied to the predetermined side faces of each honeycomb fired body to form an adhesive paste layer. On the adhesive paste layer, another honeycomb fired body is stacked, and this procedure is repeated. In this manner, an aggregate of the honeycomb fired bodies is manufactured which includes the honeycomb fired bodies with an adhesive paste applied on the side faces.

Subsequently, the aggregate of the honeycomb fired bodies is heated by using a drying apparatus or the like so that the adhesive paste is dried and solidified. In this manner, a ceramic block in which a plurality of honeycomb fired bodies are bonded to one another by interposing an adhesive layer is manufactured.

The adhesive paste used may contain an inorganic binder, an organic binder, and inorganic particles. The adhesive paste may further contain inorganic fiber and/or whisker.

Then, a periphery cutting process is carried out in which the ceramic block is subjected to a cutting process. Specifically, cutting process is performed on the ceramic block by using a diamond cutter to manufacture a ceramic block having the periphery processed into a round pillar shape.

A coat layer forming process is carried out in which a coat material paste is applied around the periphery of the round pillar-shaped ceramic block, dried, and solidified to form a coat layer.

As the coat material paste, the adhesive paste may be used.

In this manner, a honeycomb structured body is manufactured.

An oxidation process is carried out in which the honeycomb structured body is oxidized by heating under an oxidative atmosphere at 700°C to 1100°C for 1 to 10 hours.

The oxidation process is carried out under an atmosphere containing oxygen and preferably carried out under an ambient atmosphere from the standpoint of cost efficiency.

The oxygen concentration (content as oxygen) of the oxidative atmosphere is not particularly limited, and is preferably 5% to 21% by volume. From the standpoint of cost efficiency, air is preferably used.

When the oxygen concentration of the oxidative atmosphere is less than 5% by volume, oxidation of the surface of each of the silicon carbide particles is unstable and formation of a silica layer having a desired thickness is difficult. Further, in the case where the oxygen concentration of the oxidative atmosphere is less than 5% by volume, the heat treatment is required to be performed for a long period of time and the manufacturing efficiency tends to be lowered. On the other hand, in the case where the oxygen concentration of the oxidative atmosphere is more than 21% by volume, an additional process is needed for generating the oxidative atmosphere, such as preparation of gaseous oxygen, and the manufacturing efficiency tends to be lowered.

The heat treatment temperature in the oxidation process is preferably 700°C to 1100°C.

When the heat treatment temperature is less than 700°C, formation of a silica layer having a desired thickness is difficult and the heat treatment is required to be performed for a long period of time to form a silica layer having a target thickness. On the other hand, when the heat treatment temperature is higher than 1100°C, it is difficult to control the heat treatment temperature.

The heat treatment time in the oxidation process is 1 to 10 hours, and is appropriately determined in accordance with the heat treatment temperature and the target thickness of the silica layer.

Specifically, when the heat treatment temperature is 700°C or more and is less than 850°C, the heat treatment time is preferably 3 to 12 hours. When the heat treatment temperature is 850°C or more and is less than 950°C, the heat treatment time is preferably 2 to 10 hours. When the heat treatment temperature is 950°C or more and is less than 1100°C, the heat treatment time is preferably 0.5 to 4.5 hours. In particular, the oxidation process at 1000°C to 1100°C for 1 to 4 hours is preferable.

When the heat treatment time is shorter than the lower limit, it is difficult to form a silica layer having a target thickness. On the other hand, when the heat treatment time is longer than the upper limit, a formed silica layer may be thicker than the target thickness. As a result, it may be difficult to uniformly support a catalyst on the honeycomb structured body in a supporting process described later.

In the present description, the heat treatment time refers to a time period during which the temperature is maintained at the target heat treatment temperature after being raised to that temperature. Accordingly, the time for heating the honeycomb structured body during the entire oxidation process includes a time required for temperature rise and temperature fall in addition to the heat treatment time.

Through the oxidation process carried out under the above conditions, a silica layer having a thickness measured by X-ray photoelectron spectroscopy (XPS) of 5 to 100 nm is formed on the surface of each of the silicon carbide particles contained in the honeycomb fired body configuring the honeycomb structured body.

Alter the oxidation process, a supporting process is carried out in which a catalyst containing oxide ceramics or zeolite is supported on the honeycomb structured body.

The catalyst to be supported on the honeycomb structured body may be the catalyst mentioned in the description on the honeycomb catalyst body of the present embodiment.

A method of supporting the catalyst on the honeycomb structured body may be a method in which the honeycomb structured body is first immersed in a slurry containing zeolite, next removed from the slurry, and then heated.

In the supporting process, the amount of the zeolite supported is 50 g/L or more, and is preferably 50 to 150 g/L. More preferably, the amount of the zeolite supported is 80 g/L or more, and is still more preferably 80 to 150 g/L.

The amount of the zeolite supported may be adjusted by a method of repeating the processes of immersing the honeycomb structured body in the slurry and heating the honeycomb structured body, a method of changing the concentration of the slurry, or the like.

In this manner, the honeycomb catalyst body according to the first embodiment of the present invention is manufactured.

In the above method for manufacturing the honeycomb catalyst body, an oxidation process is carried out after the coat layer forming process. However, an oxidation process may be carried out between the bonding process and the periphery cutting process or between the periphery cutting process and the coat layer forming process in the method for manufacturing the honeycomb catalyst body of the present embodiment.

The honeycomb structured body subjected to the oxidation process is not limited to the honeycomb structured body manufactured in the above processes, but may be any aggregated honeycomb structured body. For example, the oxidation process may be carried out to a honeycomb structured body in which no coat layer is formed.

Hereinafter, effects of the honeycomb catalyst body and a method for manufacturing the honeycomb catalyst body of the present embodiment are described.

(1) In the honeycomb catalyst body and a method for manufacturing the honeycomb catalyst body of the present embodiment, a silica layer is formed on the surface of each of the silicon carbide particles in the honeycomb fired body configuring the honeycomb structured body. A catalyst containing zeolite is supported on the surface of each of the silicon carbide particles via the silica layer therebetween.

An oxide layer formed on the surface of each of the silicon carbide particles allows the catalyst to be uniformly supported.

(2) In the honeycomb catalyst body and a method for manufacturing the honeycomb catalyst body of the present embodiment, the thickness of the silica layer measured by X-ray photoelectron spectroscopy (XPS) is 5 to 100 nm.

The thickness of the silica layer measured by X-ray photoelectron spectroscopy (XPS) in a range of 5 to 100 nm facilitates uniform supporting of the catalyst containing zeolite on the surface of each of the silicon carbide particles.

(3) In the honeycomb catalyst body and a method for manufacturing the honeycomb catalyst body of the present embodiment, the amount of the zeolite supported is 50 g/L or more.

In the honeycomb catalyst body of the present embodiment, the zeolite is uniformly supported on the surface of each of the silicon carbide particles in the honeycomb fired body. Since the amount of the zeolite supported is 50 g/L or more, enough NOx conversion efficiency is achieved when such a honeycomb catalyst body is used in a urea-SCR device.

EXAMPLES

The following illustrates examples that more specifically disclose the first embodiment of the present invention, and the present invention is not limited to these examples.

(Example 1)

(Manufacture of honeycomb catalyst body)

(1) Manufacturing process of honeycomb structured body

An amount of 52.8% by weight of a silicon carbide coarse powder having an avexage particle size of 22 $\mu$m and 22.6% by weight of a silicon carbide fine powder having an average particle size of 0.5 $\mu$m were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a wet mixture. The obtained wet mixture was extrusion-molded, and an extrusion-molded body was cut to manufacture a raw honeycomb molded body having the same shape as that illustrated in Figs. 2 (a) and 2 (b) and having cells not plugged.

This raw honeycomb molded body was dried by using a microwave drying apparatus to manufacture a dried honeycomb molded body. Then, predetermined cells of the dried honeycomb molded body were filled with a plug material paste having the same composition as the above-mentioned wet mixture, and the honeycomb molded body was dried again by using the drying apparatus.

The dried honeycomb molded body was degreased at 400°C, and then fired at 2200°C in a normal-pressure argon atmosphere for 3 hours so that a honeycomb fired body made of a silicon carbide sintered body was manufactured. The honeycomb fired body had a porosity of 45%, an average pore diameter of 15 $\mu$m, measurements of 34.3 mm $\times$ 34.3 mm $\times$ 150 mm, the number of cells (cell density) of 46.5 pcs/cm$^2$ and a thickness of each cell wall of 0.25 mm (10 mil).

Next an adhesive paste was prepared which contains alumina fibers having an average fiber length of 20 $\mu$m and an average fiber size of 2 $\mu$m (30% by weight), silicon carbide particles having an average particle size of 0.6 $\mu$m (21% by weight), silica sol (15% by weight, solids content: 30% by weight), carboxymethyl cellulose (5.6% by weight), and water (28.4% by weight).

A number of 16 pieces of honeycomb fired bodies were used to manufacture an aggregate of the honeycomb fired bodies by applying the adhesive paste on the side faces of the honeycomb fired bodies and the honeycomb fired bodies were bonded to one another (4 pieces $\times$ 4 pieces) with the adhesive paste interposed therebetween.

Further, the aggregate of the honeycomb fired bodies was heated at 120°C so that the adhesive paste was dried and solidified. In this manner, a rectangular pillar-shaped ceramic block was manufactured in which an adhesive layer having a thickness of 1.0 mm was formed.

Subsequently, the periphery of the ceramic block was cut with a diamond cutter, whereby a round pillar-shaped ceramic block having a diameter of 142 mm was manufactured.

Next, a coat material paste was applied around the periphery of the round pillar-shaped ceramic block to form a coat material paste layer. Then, the coat material paste layer was dried and solidified at 120°C to form a coat layer, whereby a round pillar-shaped honeycomb structured body having a coat layer around the periphery and measurements of 143.8 mm in diameter $\times$ 150 mm in length was manufactured.

The adhesive paste was used as a coat material paste.

(2) Oxidation process

The manufactured honeycomb structured body was heated under an ambient atmosphere. The temperature was raised from room temperature to 700°C at a rate of 300°C/hour. The honeycomb structured body was allowed to stand at 700°C for three hours. Then the temperature was lowered to 300°C at a rate of 10.0°C/hour over four hours. Then, the honeycomb structured body was placed at room temperature (25°C).

In the oxidation process, the surface of the honeycomb fired body configuring the honeycomb structured body is oxidized. More specifically, a silica layer is formed on the surface of each of the silicon carbide particles in the honeycomb fired body.

(3) Supporting process

The following zeolite as a catalyst was supported on the cell walls in the honeycomb structured body after the oxidation process. First, copper ion-exchanged zeolite powder (average particle size of 2 $\mu$m) was mixed with a sufficient amount of water and the mixture was stirred to prepare a zeolite slurry. The honeycomb structured body was immersed in this zeolite slurry with one end face down and held for a minute. Then, the resulting honeycomb structured body was heated at 110°C for one hour to be dried and fired at 700°C for one hour. In this manner, a zeolite supporting layer was formed.

At this time, the processes of immersion into the zeolite slurry and drying are repeated until the amount of the formed zeolite supporting layer reached 100 g per liter of apparent volume of the honeycomb structured body.

In this manner, a honeycomb catalyst body having 100 g/L of zeolite supported thereon was manufactured.

(Examples 2 to 6)

Honeycomb catalyst bodies were manufactured in the same manner as in Example 1, except that the heat treatment temperature and the heat treatment time in the oxidation process were changed as shown in Table 1.

The heat treatment temperature and the heat treatment time in Examples 2 to 6 were 900°C for 10 hours, 1000°C for 3 hours, 1100°C for 1 hour, 1100°C for 3 hours, and 1100°C for 4 hours, respectively.

(Comparative Example 1)

A honeycomb catalyst body was manufactured in the same manner as in Example 1, except that the oxidation process was not carried out.

(Comparative Example 2)

A honeycomb catalyst body was manufactured in the same manner as in Example 1, except that the heat treatment temperature and the heat treatment time in the oxidation process were changed to 1100°C for 5 hours.

(Evaluation of honeycomb catalyst bodies)

(1) Determination of weight increase

The weight increase of the honeycomb fired body configuring the honeycomb catalyst body was determined with respect to each of the honeycomb catalyst bodies manufactured in Examples 1 to 6 and Comparative Examples 1 and 2.

In determination of the weight increase, one honeycomb fired body (34.3 mm $\times$ 34.3 mm $\times$ 150 mm) was cut out by using a diamond cutter from each of the honeycomb catalyst bodies manufactured in Examples 1 to 6 and Comparative Examples 1 and 2. The weight "$M_1$" of each oxidized honeycomb fired body was measured. Separately, the weight "$M_0$" of each honeycomb fired bodies manufactured in Examples 1 to 6 and Comparative Examples 1 and 2 prior to the oxidation process (prior to manufacture of an aggregate of the honeycomb fired bodies) was measured. Based on the measurement results, the weight increase was calculated by using the following formula.

$$\texttt{Weight increase (\% by weight)} = [(M_1-M_0)/M_0] \times 100$$

Table 1 shows measurement results of the weight increase.

The weight increase was 0.06% by weight in Example 1, 0.20% by weight in Example 2, 0.25% by weight in Example 3, 0.30% by weight in Example 4, 0.33% by weight in Example 5, and 0.49% by weight in Example 6; and 0% by weight in Comparative Example 1, and 0.56% by weight in Comparative Example 2.

(2) Measurement of thickness of silica layer by X-ray photoelectron spectroscopy (XPS)

With respect to the honeycomb catalyst bodies manufactured in Examples 1 to 6 and Comparative Examples 1 and 2, the thickness of silica layers in honeycomb fired bodies was measured by X-ray photoelectron spectroscopy (XPS).

Samples for XPS measurement (2 cm $\times$ 2 cm $\times$ 0.25 mm) was cut out from silicon carbide parts of the honeycomb catalyst bodies manufactured in Examples 1 to 6 and Comparative Examples 1 and 2. The surface other than the cut-out face of each sample for XPS measurement was observed.

The XPS device used was Quantera SXM (trade name) manufactured by ULVAC-PHI, INC. and the X ray source was Al-K$\alpha$ rays (Monochromated Al-K$\alpha$). The measurement conditions were a voltage of 15 kV, an output of 25 W, and a measurement area of 100 $\mu$m$\varphi$. Ion-sputtering conditions were an ion species of Ar*, a voltage of 1 kV (Examples 1 to 4 and Comparative Examples 1) or 2 kV (Examples 5 and 6 and Comparative Example 2), a sputtering rate ($SiO_2$ equivalent) of 1.5 nm/min (Examples 1 to 4 and Comparative Examples 1) or 5.4 nm/min (Examples 5 and 6 and Comparative Example 2).

Qualitative analysis (wide scanning) of each sample for XPS measurement and depth profile analysis with respect to C, O, and Si were conducted by using the XPS device. Based on the result of the depth profile analysis, the thickness of the silica layer was calculated using the time at the middle strength between the maximum strength and the minimum strength of the $SiO_2$ profile and the sputtering rate ($SiO_2$ equivalent) of each sample for XPS measurement.

Table 1 shows the thickness of the silica layers measured by X-ray photoelectron spectroscopy (XPS).

The thickness of the silica layer was 8 nm in Example 1, 26 nm in Example 2, 36 nm in Example 3, 45 nm in Example 4, 65 nm in Example 5, and 95 nm in Example 6; and less than 4 nm in Comparative Example 1 and 109 nm in Comparative Example 2.

**[0081]**    [0078]

(3) Measurement of NOx conversion efficiency

The NOx conversion efficiency was measured with respect to each of the honeycomb catalyst bodies manufactured in Examples 1 to 6 and Comparative Examples 1 and 2.

In measurement of the NOx conversion efficiency, one honeycomb fired body (34.3 mm $\times$ 34.3 mm $\times$ 150 mm) was cut out by using a diamond cutter from each of the honeycomb catalyst bodies manufactured in Examples 1 to 6 and Comparative Examples 1 and 2. The cut-out honeycomb fired body was further cut into a round pillar-shaped short body ($\varphi$1 inch (25.4 mm) $\times$ 3 inches (76.2 mm)).

Next, each cell of the manufactured short bodies was filled with an adhesive paste so that either one end portion of the cell was plugged in the same manner as in the plugging and degreasing processes described above. The short bodies in which cells were plugged were degreased at 400°C to give samples for measuring the NOx conversion efficiency.

The NOx conversion efficiency was measured by using a NOx conversion efficiency measuring device (Catalyst Test System: SIGU-2000, manufactured by HORIBA, Ltd.).

The NOx conversion efficiency measuring device has a gas generator and a reactor. The simulated exhaust gas and ammonia generated by the gas generator were passed through the reactor in which the sample for measuring the NOx conversion efficiency was set. The content (volume ratio) of the simulated exhaust gas was $NO_2$: 350 ppm ($NO_2$/NOx = 0.25), $O_2$: 14%, $H_2O$: 10%, and $N_2$: balance, and $NH_3$/NOx = 1.

The flow rate was adjusted by using a flow controller to achieve the above content.

The reactor had a constant temperature of 200°C. Zeolite was made in contact with the simulated exhaust gas and ammonia under the condition of a space velocity (SV) of 7000 hr$^{-1}$.

NOx concentration "$N_0$" before the simulated exhaust gas passed through the sample for measuring the NOx conversion efficiency and NOx concentration "$N_1$" after the simulated exhaust gas passed through the sample for measuring the NOx conversion efficiency were measured. Based on the measurement results, the NOx conversion efficiency of each honeycomb catalyst body was determined using the following formula. NOx conversion efficiency (%) = $[(N_0-N_1)/N_0] \times 100$ Table 1 shows the measurement results of the NOx conversion efficiency.

The NOx conversion efficiency was 62% in Example 1, 66% in Example 2, 70% in Example 3, 74% in Example 4, 68% in Example 5, and 60% in Example 6; and 48% in Comparative Example 1 and 52% in Comparative Example 2.

Table 1 shows the heat treatment temperature, the heat treatment time, the weight increase, the thickness of the silica layer, and the NOx conversion efficiency, with respect to the honeycomb catalyst bodies manufactured in Examples 1 to 6 and Comparative Examples 1 and 2.

Fig. 4 shows a graph indicating a relation between the thickness of the silica layer and the NOx conversion efficiency in each Example and Comparative Example, based on the measurement results in Examples 1 to 6 and Comparative Examples 1 and 2.

[Table 1]

| | Heat treatment | | Weight increase (% by weight) | Thickness of silica layer (nm) | NOx conversion efficiency (%) |
|---|---|---|---|---|---|
| | Temperature (°C) | Time (hr) | | | |
| Example 1 | 700 | 3 | 0.06 | 8 | 62 |
| Example 2 | 900 | 10 | 0.20 | 26 | 66 |
| Example 3 | 1000 | 3 | 0.25 | 36 | 70 |
| Example 4 | 1100 | 1 | 0.30 | 45 | 74 |

(continued)

| | Heat treatment | | Weight increase (% by weight) | Thickness of silica layer (nm) | NOx conversion efficiency (%) |
|---|---|---|---|---|---|
| | Temperature (° C) | Time (hr) | | | |
| Example 5 | 1100 | 3 | 0.33 | 65 | 68 |
| Example 6 | 1100 | 4 | 0.49 | 95 | 60 |
| Comparative Example 1 | - | - | 0 | <4 | 48 |
| Comparative Example 2 | 1100 | 5 | 0.56 | 109 | 52 |

The measurement results of the weight increase indicate that the oxidation process leads to an increase in the weight of the honeycomb fired body.
The measurement results of the thickness of the silica layer by X-ray photoelectron spectroscopy (XPS) confirm formation of a silica layer (8 to 109 nm in thickness) in each honeycomb catalyst bodies of Examples 1 to 6 and Comparative Example 2 in which the oxidation process was carried out. In contrast, in the honeycomb catalyst body manufactured in Comparative Example 1 in which the oxidation process was not carried out, the thickness of the silica layer was less than 4 nm which indicates that an effective silica layer was not formed. Fig. 4 indicates the thickness of the silica layer of Comparative Example 1 as 0 nm for the convenience.
As above, it is presumable that the weight increase by the oxidation process can be considered as the weight ratio of the silica layer in the honeycomb fired body.
The measurement results of the NOx conversion efficiency indicate that the NOx conversion efficiency was high as 60% to 74% in the case that the thickness of the silica layer was 8 to 95 nm as in Examples 1 to 6. In contrast, in the case that no effective silica layer was formed as in Comparative Example 1 and in the case that the silica layer was thick as 109 nm as in Comparative Example 2, the NOx conversion efficiency was low as 48% and 52%, respectively. The above results indicate that control of the thickness of the silica layer within a predetermined range (5 to 100 nm, preferably 8 to 95 nm) improves the NOx conversion efficiency. Accordingly, control of the thickness of the silica layer within a predetermined range presumably allows zeolite to be uniformly supported on the surface of each of the silicon carbide particles, leading to improvement in the NOx conversion efficiency.
Here, it is presumable that the kind of the catalyst does not significantly affect the condition of the catalyst supported on the surface of each of the silicon carbide particles. Accordingly, even in the case that the catalyst is not zeolite but oxide ceramics such as $Al_2O_3$, control of the thickness of the silica layer within a predetermined range presumably allows the catalyst to be uniformly supported on the surface of each of the silicon carbide particles.
Therefore, the conversion efficiency of toxic components such as CO and HC contained in exhaust gases can be presumably improved by using oxide ceramics supporting a noble metal or alkaline earth metal thereon, in the same way as the NOx conversion efficiency improved by zeolite.

(Second Embodiment)

Now, a description is given on a second embodiment that is one embodiment of the present invention.
In the present embodiment, a honeycomb structured body configuring the honeycomb catalyst body has a single honeycomb fired body. Such a honeycomb structured body having a single honeycomb fired body is referred to as an integral honeycomb structured body.

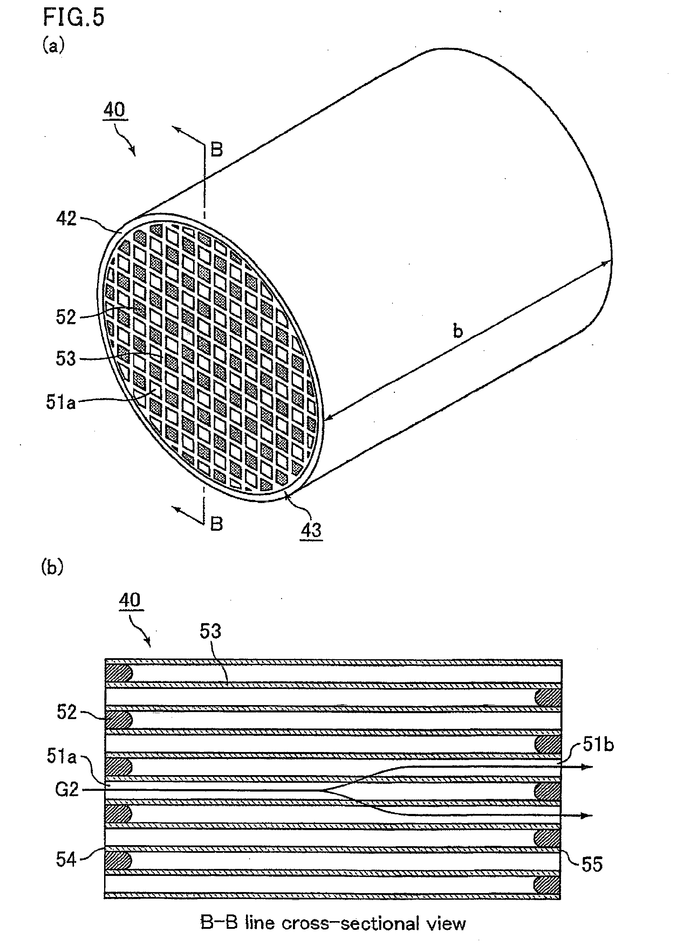

Fig. 5 (a) is a schematic perspective view illustrating one example of a honeycomb structured body configuring a honeycomb catalyst body of the second embodiment of the present invention. Fig. 5 (b) is a B-B line cross-sectional view of the honeycomb structured body in Fig. 5(a).
A honeycomb structured body 40 shown in Figs. 5(a) and 5(b) has a ceramic block 43 including a single round pillar-shaped honeycomb fired body having a large number of cells 51a and 51b longitudinally (direction of arrow "b" in Fig. 5 (a)) placed in parallel with one another with a cell wall 53 interposed therebetween. On the periphery of the ceramic block 43, a coat layer 42 is formed. Here, a coat layer may be formed according to need.
In the honeycomb structured body 40, either one end portion of each of the cells 51a and 51b is plugged with a plug material 52. Therefore, exhaust gases G2 (in Fig. 5(b), exhaust gases are represented by "G2" and a flow thereof is indicated by arrows) which have flowed into one of the cells 51a with an opening on one end face 54 surely pass through the cell wall 53 that partitions the cells 51a and the cells 51b with an opening on the other end face 55, and flow out from one of the cells 51b. Thus, the cell wall 53 functions as a filter for capturing PM and the like.

The honeycomb fired body configuring the honeycomb structured body is mainly made of silicon carbide particles, which is similar to the first embodiment of the present invention. Specifically, the honeycomb fired body contains 60% by weight or more of silicon carbide.

The honeycomb fired body may contain other components, provided that 60% by weight or more of silicon carbide is contained. For example, the honeycomb fired body may contain 40% by weight or less of silicon. The main component of the materials for forming the honeycomb fired body may be silicon-containing silicon carbide that is silicon carbide blended with metal silicon or may be silicon carbide bound with silicon or a silicate compound.

In the honeycomb catalyst body of the present embodiment, a catalyst containing oxide ceramics or zeolite is supported on such a honeycomb structured body. The catalyst is preferably supported on cell walls in the honeycomb fired body configuring the honeycomb structured body.

In the same manner as in the first embodiment of the present invention, a silica layer is formed on each of the surfaces of the silicon carbide particles forming the honeycomb fired body. Moreover, the catalyst is supported on the surface of each of the silicon carbide particles via the silica layer therebetween.

The honeycomb catalyst body of the present embodiment is similar to the honeycomb catalyst body of the first embodiment of the present invention, with respect to the kind and thickness of the silica layer, the kind of the catalyst, the condition of the catalyst supported, the average particle size of the catalyst, and the amount of the oxide ceramics or zeolite supported on the honeycomb structured body (cell walls).

In manufacturing of a honeycomb structured body configuring the honeycomb catalyst body of the present invention, a honeycomb molded body is manufactured in the same way as in the first embodiment of the present invention, except that the honeycomb molded body formed by extrusion molding has a larger size compared to the honeycomb molded body described in the first embodiment of the present invention and has an outer shape different from that of the honeycomb molded body of the first embodiment of the present invention.

Other processes are similar to those for manufacturing the honeycomb structured body in the first embodiment of the present invention. It is to be noted that a bonding process is not needed as the honeycomb structured body of the second embodiment of the present invention has a single honeycomb fired body. Moreover, it is to be noted that a periphery cutting process is not needed for the honeycomb structured body of the second embodiment of the present invention.

The oxidation process (process of forming a silica layer on the surface of each of the silicon carbide particles in the honeycomb fired body) and the supporting process (process of forming a layer supporting zeolite or the like as a catalyst) described in the first embodiment of the present invention are carried out to the honeycomb structured body manufactured as above. In this manner, the honeycomb catalyst body according to the second embodiment of the present invention is manufactured.

In a method for manufacturing the honeycomb catalyst body of the present embodiment, the oxidation process may be carried out after the coat layer forming process. In the case where the periphery cutting process is carried out, the oxidation process may be carried out between the firing process and the periphery cutting process, or between the periphery cutting process and the coat layer forming process. On the other hand, in the case that the periphery cutting process is not carried out, the oxidation process may be carried out between the firing process and the coat layer forming process.

In addition, the honeycomb structured body to be oxidized is not limited to the honeycomb structured body manufactured in the above processes, and may be any integral honeycomb structured body. For example, the oxidation process may be carried out to a honeycomb structured body in which a coat layer is not formed.

The effects (1) to (3) described in the first embodiment of the present invention can be exerted also in the honeycomb catalyst body and the method for manufacturing the honeycomb catalyst body of the present embodiment.

(Other embodiments)

In the case that a honeycomb catalyst body is manufactured by using an aggregated honeycomb structured body, a catalyst containing oxide ceramics or zeolite is supported on a honeycomb structured body in the first embodiment of the present invention. However, the catalyst may be supported on a honeycomb fired body and a plurality of the honeycomb fired bodies supporting the catalyst thereon may be bonded to one another with an adhesive layer interposed therebetween.

**[0100]** [0097] In the honeycomb catalyst body of the present invention, the shape of the honeycomb structured body is not limited to round pillar shape, but may be any pillar shape such as cylindroid pillar shape and polygonal pillar shape.

In the honeycomb catalyst body of the present invention, the porosity of the honeycomb fired body configuring the honeycomb structured body is not particularly limited, and is preferably 35% to 70%.

When the porosity of the honeycomb fired body is less than 35%, particulates (PM) may easily cause clogging in the honeycomb fired body. On the other hand, when the porosity of the honeycomb fired body is more than 70%, the strength of the honeycomb fired body may be lowered, leading to easy breakage.

The average pore size of the honeycomb fired body configuring the honeycomb structured body is preferably 5 to 30 $\mu$m.

When the average pore size of the honeycomb fired body is less than 5 $\mu$m, particulates may easily cause clogging in the honeycomb fired body. On the other hand, when the average pore size of the honeycomb fired body is more than 30 $\mu$m, particulates may pass through the pores in the cell walls. In such a case, the honeycomb fired body fails to capture particulates, resulting in insufficient performance as a filter.

The porosity and the pore size may be measured by mercury porosimetry that is a conventionally known method.

The thickness of the cell walls in the honeycomb fired body is not particularly limited, and is preferably 0.12 to 0.40 mm.

When the thickness of the cell wall is less than 0.12 mm, the cell walls are too thin to maintain the strength of the honeycomb fired body. On the other hand, when the thickness of the cell wall is more than 0.40 mm, the pressure loss of the honeycomb structured body may easily increase.

The cell density in a cross section perpendicular to the longitudinal direction of the honeycomb fired body is not particularly limited. Preferably, the lower limit is 31.0 pcs/cm$^2$ (200 pcs/inch$^2$) and the upper limit is 93.0 pcs/cm$^2$ (600 pcs/inch$^2$). More preferably, the lower limit is 38.8 pcs/cm$^2$ (250 pcs/inch$^2$) and the upper limit is 77.5 pcs/cm$^2$ (500 pcs/inch$^2$).

In the honeycomb catalyst body of the present invention, the shape of each of cells in a cross section perpendicular to the longitudinal direction of the honeycomb fired body is not limited to a quadrangle, and may be any shape such as circular, elliptical, pentagonal, hexagonal, trapezoidal, and octagonal shapes. Moreover, various shapes may be employed in combination.

The bonding process in manufacture of an aggregated honeycomb structured body may be carried out by temporarily fixing honeycomb fired bodies in a mold having the same shape as a ceramic block (or an aggregate of honeycomb fired bodies) to be manufactured and injecting an adhesive paste to the gap between the honeycomb fired bodies, in addition to a method of applying an adhesive paste on side faces of each honeycomb fired body.

In manufacturing of an aggregated honeycomb structured body, a plurality of kinds of honeycomb fired bodies having various cross-sectional shapes may be manufactured. Then, the plurality of kinds of honeycomb fired bodies may be combined to form a ceramic block in which a plurality of honeycomb fired bodies are bonded to one another with an adhesive layer interposed therebetween. In such a case, the periphery cutting process may be omitted.

For example, three kinds of honeycomb fired bodies different in the cross-sectional shape may be manufactured. A first honeycomb fired body has a cross section surrounded by two lines and one arc. A second honeycomb fired body has a cross section surrounded by three lines and one arc. A third honeycomb fired body has a cross section surrounded by four lines (quadrangle). These three kinds of honeycomb fired bodies different in the cross-sectional shape may be manufactured by changing the shape of the die used in extrusion molding. A round pillar-shaped honeycomb structured body may be manufactured by combining eight pieces of the first honeycomb fired bodies, four pieces of the second honeycomb fired bodies, and four pieces of the third honeycomb fired bodies.

In the honeycomb catalyst body of the present invention, the organic binder contained in the wet mixture used for manufacturing a honeycomb fired body configuring the honeycomb structured body is not particularly limited. Examples thereof include methyl cellulose, carboxy methyl cellulose, hydroxyl ethyl cellulose, polyethylene glycol, and the like. Among these, methyl cellulose is preferable. Commonly, the amount of the organic binder is preferably 1 to 10 parts by weight for each 100 parts by weight of ceramic powder.

The plasticizer contained in the wet mixture is not particularly limited, and may be glycerin and the like.

Moreover, the lubricant contained in the wet mixture is not particularly limited, and examples thereof include polyoxyalkylene compounds such as polyoxyethylene alkyl ether and polyoxypropylene alkyl ether, and the like.

Specific examples of the luburicant include polyoxyethylene monobutyl ether, polyoxypropylene monobutyl ether, and the like.

In some cases, the wet mixture may contain no plasticizer and no lubricant.

In preparing the wet mixture, a dispersion medium may be used. Examples of the dispersion medium include water, organic solvents such as benzene, alcohols such as methanol, and the like.

The wet mixture may further contain a molding aid.

The molding aid is not particularly limited, and examples thereof include ethylene glycol, dextrin, fatty acid, fatty acid soap, polyalcohol, and the like.

The wet mixture may further contain a pore forming agent such as balloons that are micro hollow spheres containing oxide ceramics, spherical acrylic particles, and graphite, if needed.

The balloons are not particularly limited, and examples thereof include alumina balloons, glass micro balloons, shirasu balloons, Fly ash balloons (FA balloons), mullite balloons, and the like. Among these, alumina balloons are preferable.

Examples of the inorganic binder contained in the adhesive paste and the coat material paste include silica sol, alumina sol, and the like. Each of these may be used alone, or two or more of these may be used in combination. Among the inorganic binders, silica sol is preferable.

Examples of the organic binder contained in the adhesive paste and the coat material paste include polyvinyl alcohol, methyl cellulose, ethyl cellulose, carboxy methyl cellulose, and the like. Each of these may be used alone, or two or more of these may be used in combination. Among the organic binders, carboxy methyl cellulose is preferable.

Examples of the inorganic fibers contained in the adhesive paste and the coat material paste include fibers of ceramics such as silica-alumina, mullite, alumina, and silica. Each of these may be used alone, or two or more of these may be used in combination. Among the inorganic fibers, alumina fibers are preferable.

Examples of the inorganic particles contained in the adhesive paste and the coat material paste include carbide particles, nitride particles, and the like. More specifically, the examples may include silicon carbide particles, silicon nitride particles, boron nitride particles, and the like. Each of these may be used alone, or two or more of these may be used in combination. Among the inorganic particles, silicon carbide particles are preferable because of its excellent thermal conductivity.

The adhesive paste and the coat material paste may further contain a pore forming agent such as balloons that are micro hollow spheres containing oxide ceramics, spherical acrylic particles, and graphite, if needed. The balloons are not particularly limited, and examples thereof include alumina balloons, glass micro balloons, shirasu balloons, Fly ash balloons (FA balloons), mullite balloons, and the like. Among these, alumina balloons are preferable.

Examples of the catalyst component other than the zeolite in the honeycomb catalyst body of the present invention include: noble metals such as platinum, palladium, and rhodium; alkali metals such as potassium and sodium; and alkaline earth metals such as barium. Among these, platinum is preferable.

In the honeycomb structured body in the honeycomb catalyst body of the present invention, end portions of each cell may not be plugged with a plug. In such a case, a catalyst is supported on the honeycomb structured body and the honeycomb structured body serves as a catalyst carrier for converting toxic gas components such as CO, HC, and NOx contained in exhaust gases.

Essential features of the honeycomb catalyst body of the present invention are a silica layer formed on the surface of each of the silicon carbide particles, a catalyst containing oxide ceramics or zeolite supported on the surface of each of the silicon carbide particles via a silica layer therebetween, a thickness of the silica layer measured by X-ray photoelectron spectroscopy (XPS) being 5 to 100 nm, and oxide ceramics or zeolite being supported in an amount of 50 g/L or more. The method for manufacturing a honeycomb catalyst body of the present invention essentially has an oxidation process for oxidizing a honeycomb structured body by heat treatment under an oxidative atmosphere at 700°C to 1100°C for 1 to 10 hours and a supporting process for supporting a catalyst containing oxide ceramics or zeolite after the oxidation process. The oxidation process essentially includes formation of a silica layer having a thickness measured by X-ray photoelectron spectroscopy (XPS) being 5 to 100 nm on the surface of each of the silicon carbide particles contained in the honeycomb fired body, and the supporting process essentially includes supporting the zeolite in an amount of 50 g/L or more.

Desired effects can be obtained by an appropriate combination of these essential features with various configurations (e.g. components of honeycomb fired body, kind of catalyst, conditions for oxidation process, etc.) described in the first embodiment, the second embodiment, and other embodiments of the present invention.

EXPLANATION OF SYMBOLS

| | |
|---|---|
| 10, 40 | Honeycomb structured body |
| 11 | Adhesive layer |
| 20 | Honeycomb fired body |
| 21a, 21b, 51a, 51b | Cell |
| 23, 53 | Cell wall |
| 31 | Silicon carbide particles |
| 32 | Silica layer |
| 33 | Catalyst (catalyst containing zeolite) |

**Claims**

1. A honeycomb catalyst body comprising:

   a honeycomb structured body including a porous honeycomb fired body having a large number of cells longitudinally placed in parallel with one another with a cell wall interposed therebetween, the honeycomb fired body containing 60% by weight or more of silicon carbide; and

a catalyst containing zeolite, the catalyst being supported on the honeycomb structured body, wherein

a silica layer is formed on a surface of each of the silicon carbide particles,

the catalyst is supported on the surface of each of the silicon carbide particles via the silica layer therebetween,

the silica layer has a thickness measured by X-ray photoelectron spectroscopy (XPS) of 5 to 100 nm, and

an amount of the zeolite supported is 50 g/L or more.

2. The honeycomb catalyst body according to claim 1, wherein

the zeolite is supported on an inside of the cell wall of the honeycomb fired body.

3. The honeycomb catalyst body according to claim 1 or 2, wherein

the honeycomb structured body has a single honeycomb fired body.

4. The honeycomb catalyst body according to claim 1 or 2, wherein

the honeycomb structured body has a plurality of honeycomb fired bodies bound to one another with an adhesive layer interposed therebetween.

5. The honeycomb catalyst body according to any of claims 1 to 4, wherein

the thickness of the silica layer is measured by XPS at a sputtering rate ($SiO_2$ equivalent) of 1.5 nm/min or 5.4 nm/min.

6. The honeycomb catalyst body according to any of claims 1 to 5, wherein

the silica layer is formed by oxidizing the honeycomb structured body under an oxidative atmosphere which has an oxygen concentration of 5% to 21% by volume.

7. The honeycomb catalyst body according to any of claims 1 to 6, wherein

the honeycomb catalyst body is used in an urea Selective Catalytic Reduction (urea-SCR) device.

8. A method for manufacturing a honeycomb catalyst body comprising: a honeycomb structured body including a porous honeycomb fired body having a large number of cells longitudinally placed in parallel with one another with a cell wall interposed therebetween, the honeycomb fired body containing 60% by weight or more of silicon carbide; and a catalyst containing zeolite, the catalyst being supported on the honeycomb structured body, the method comprising:

oxidizing the honeycomb structured body including a porous honeycomb fired body by heating under an oxidative atmosphere at 700°C to 1100°C for 1 to 10 hours; and

supporting a catalyst containing zeolite on the honeycomb structured body after the oxidation process, wherein

the oxidation process includes formation of a silica layer having a thickness measured by X-ray photoelectron spectroscopy (XPS) of 5 to 100 nm on a surface of each of the silicon carbide particles in the honeycomb fired body, and the supporting process includes supporting of 50 g/L or more of the zeolite.

9. The method for manufacturing a honeycomb catalyst body according to claim 8, wherein the oxidative atmosphere in the oxidation process has an oxygen concentration of 5% to 21% by volume.

10. The method for manufacturing a honeycomb catalyst body according to claim 8 or 9 further comprising bonding a plurality of honeycomb fired bodies via an adhesive layer therebetween.

**Patentansprüche**

1. Wabenkatalysatorkörper umfassend:

einen wabenstrukturierten Körper, der einen gebrannten porösen Wabenkörper mit einer großen Anzahl von Zellen, die in Längsrichtung parallel zueinander mit einer dazwischen angeordneten Zellwand angeordnet sind, einschließt, wobei der gebrannte Wabenkörper 60 Gew.-% Siliziumcarbid enthält, und

einen Katalysator, der Zeolith enthält, wobei der Katalysator auf dem wabenstrukturierten Körper angeordnet ist, wobei

eine Silikaschicht auf einer Oberfläche jedes der Siliziumcarbidteilchen gebildet ist,

der Katalysator auf der Oberfläche jedes der Siliziumcarbidteilchen über die Silikaschicht dazwischen angeordnet ist,

die Silikaschicht eine Dicke, die durch Röntgenphotoelektronenspektroskopie (XPS) gemessen wird, von 5 bis 100 nm aufweist und

die Menge des aufgebrachten Zeoliths 50 g/L oder mehr beträgt.

2. Wabenkatalysatorkörper gemäß Anspruch 1, worin der Zeolith auf einer Innenseite der Zellwand des gebrannten Wabenkörpers aufgebracht ist.

3. Wabenkatalysatorkörper gemäß Anspruch 1 oder 2, worin der wabenstrukturierte Körper einen einzelnen gebrannten Wabenkörper aufweist.

4. Wabenkatalysatorkörper gemäß Anspruch 1 oder 2, worin der wabenstrukturierte Körper eine Vielzahl gebrannter Wabenkörper aufweist, die mit einer dazwischen angeordneten Klebeschicht miteinander verbunden sind.

5. Wabenkatalysatorkörper gemäß Anspruch 1 bis 4, wobei die Dicke der Silikaschicht durch XPS bei einer Sputtering-Geschwindigkeit ($SiO_2$-Äquivalent von 1,5 nm/min oder 5,4 nm/min gemessen wird.

6. Wabenkatalysatorkörper gemäß einem der Ansprüche 1 bis 5, wobei die Silikaschicht durch Oxidieren des wabenstrukturierten Körpers unter einer oxidierenden Atmosphäre gebildet wird, die eine Sauerstoffkonzentration von 5 bis 21 Vol.-% aufweist.

7. Wabenkatalysatorkörper gemäß einem der Ansprüche 1 bis 6, wobei der Wabenkatalysatorkörper in einer Vorrichtung zur Selektiven Katalytischen Reduktion mit Harnstoff (Harnstoff-SCR) verwendet wird.

8. Verfahren zum Herstellen eines Wabenkatalysatorkörpers umfassend:

einen wabenstrukturierten Körper, der einen gebrannten porösen Wabenkörper mit einer großen Anzahl von Zellen, die in Längsrichtung parallel zueinander mit einer dazwischen angeordneten Zellwand angeordnet sind, einschließt, wobei der gebrannte Wabenkörper 60 Gew.-% Siliziumcarbid enthält, und

einen Katalysator, der Zeolith enthält, wobei der Katalysator auf dem wabenstrukturierten Körper angeordnet ist, wobei das Verfahren umfasst:

Oxidieren des wabenstrukturierten Körpers, der einen gebrannten porösen Wabenkörper einschließt, durch Erwärmen unter einer oxidierenden Atmosphäre bei 700 °C bis 1100 °C für 1 bis 10 Stunden und

Aufbringen eines Katalysators, der Zeolith enthält, auf den wabenstrukturierten Körper nach dem Oxidationsschritt,

worin

der Oxidationsschritt die Bildung einer Silikaschicht mit einer Dicke, die durch Röntgenphotoelektronenspektroskopie (XPS) gemessen wird, von 5 bis 100 nm auf einer Oberfläche jedes der Siliziumcarbidteilchen in den gebrannten Wabenkörper einschließt und der Schritt des Aufbringens das Aufbringen von 50 g/L oder mehr des Zeoliths einschließt.

9. Verfahren zum Herstellen eines Wabenkatalysatorkörpers gemäß Anspruch 8, worin die oxidierende Atmosphäre in dem Oxidationsschritt eine Sauerstoffkonzentration von 5 bis 21 Vol.-% aufweist.

10. Verfahren zum Herstellen eines Wabenkatalysatorkörpers gemäß Anspruch 8 oder 9, ferner umfassend das Miteinanderverbinden einer Vielzahl von gebrannten Wabenkörpern über eine dazwischenliegende Klebeschicht.

**Revendications**

1. Corps de catalyseur en nid d'abeilles comprenant :

   un corps structuré en nid d'abeilles incluant un corps cuit poreux en nid d'abeilles ayant un grand nombre de cellules placées de manière longitudinale parallèlement les unes aux autres, une paroi cellulaire étant interposée entre ces dernières, le corps cuit en nid d'abeilles contenant 60 % en poids ou plus de carbure de silicium ; et un catalyseur contenant de la zéolite, le catalyseur étant supporté sur le corps structuré en nid d'abeilles, dans lequel

   une couche de silice est formée sur une surface de chacune des particules de carbure de silicium, le catalyseur est supporté sur la surface de chacune des particules de carbure de silicium via la couche de silice entre ces dernières,

   la couche de silice a une épaisseur mesurée par spectroscopie photoélectronique aux rayons X (XPS) de 5 à 100 nm, et

   une quantité de la zéolite supportée est de 50 g/l ou plus.

2. Corps de catalyseur en nid d'abeilles selon la revendication 1, dans lequel

   la zéolite est supportée sur un intérieur de la paroi cellulaire du corps cuit en nid d'abeilles.

3. Corps de catalyseur en nid d'abeilles selon la revendication 1 ou 2, dans lequel

   le corps structuré en nid d'abeilles a un corps cuit en nid d'abeilles unique.

4. Corps de catalyseur en nid d'abeilles selon la revendication 1 ou 2, dans lequel

   le corps structuré en nid d'abeilles a une pluralité de corps cuits en nid d'abeilles attachés les uns aux autres, une couche adhésive étant interposée entre ces derniers.

5. Corps de catalyseur en nid d'abeilles selon l'une quelconque des revendications 1 à 4, dans lequel

   l'épaisseur de la couche de silice est mesurée par XPS à une vitesse de dépôt par pulvérisation cathodique (équivalent de $SiO_2$) de 1,5 nm/minute ou 5,4 nm/minute.

6. Corps de catalyseur en nid d'abeilles selon l'une quelconque des revendications 1 à 5, dans lequel

   la couche de silice est formée en oxydant le corps structuré en nid d'abeilles sous une atmosphère oxydante qui a une concentration en oxygène de 5 % à 21 % en volume.

7. Corps de catalyseur en nid d'abeilles selon l'une quelconque des revendications 1 à 6, dans lequel

   le corps de catalyseur en nid d'abeilles est utilisé dans un dispositif de Réduction Catalytique Sélective d'urée (urée-SCR).

8. Procédé pour fabriquer un corps de catalyseur en nid d'abeilles comprenant : un corps structuré en nid d'abeilles incluant un corps cuit poreux en nid d'abeilles ayant un grand nombre de cellules placées de façon longitudinale parallèlement entre elles, une paroi cellulaire étant interposée entre ces dernières, le corps cuit en nid d'abeilles contenant 60 % en poids ou plus de carbure de silicium ; et un catalyseur contenant de la zéolite, le catalyseur étant supporté sur le corps structuré en nid d'abeilles,

   le procédé comprenant :

   l'oxydation du corps structuré en nid d'abeilles incluant un corps cuit poreux en nid d'abeilles par chauffage sous une atmosphère oxydante à 700 °C à 1 100 °C pendant 1 à 10 heures ; et

   le support d'un catalyseur contenant de la zéolite sur le corps structuré en nid d'abeilles après le processus d'oxydation, dans lequel

   le processus d'oxydation inclut la formation d'une couche de silice ayant une épaisseur mesurée par spectroscopie photoélectronique à rayons X (XPS) de 5 à 100 nm sur une surface de chacune des particules de carbure de silicium dans le corps cuit en nid d'abeilles, et
le processus de support inclut le support de 50 g/l ou plus de la zéolite.

9. Procédé pour fabriquer un corps de catalyseur en nid d'abeilles selon la revendication 8,
dans lequel l'atmosphère oxydante dans le processus d'oxydation a une concentration en oxygène de 5 % à 21 % en volume.

10. Procédé pour fabriquer un corps de catalyseur en nid d'abeilles selon la revendication 8 ou 9 comprenant en outre la liaison d'une pluralité de corps cuits en nid d'abeilles via une couche adhésive entre ces derniers.

FIG.1

# FIG.2

(a)

(b)

A-A line cross-sectional view

## FIG.3

## FIG.4

# FIG.5

(a)

(b)

B-B line cross-sectional view

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003154223 A
- JP 2000218165 A
- JP 2731562 B

- EP 1707546 A1
- EP 1666146 A1
- WO 2009023202 A2